# FASCICULE DE BREVET EUROPEEN

(11) **EP 2 048 425 B1**
(45) Date de publication et mention de la délivrance du brevet: **11.04.2012**
(21) Numéro de dépôt: 08165972.4
(22) Date de dépôt: 07.10.2008
(51) Int. Cl.: F16L 37/098, F16L 37/133, F16L 37/138, F16L 37/34, F16L 37/53

(54) **Elément femelle de raccord et raccord comprenant un tel élément femelle**
Anschlussbuchse und eine solche Buchse umfassender Anschluss
Female connection element and connection including such a female element

(30) Priorité: 08.10.2007 FR 0758146
(43) Date de publication de la demande: 15.04.2009
(73) Titulaire: Staubli Faverges, 74210 Faverges (FR)
(72) Inventeur: Tiberghien, Alain - Christophe, 74320, SEVRIER (FR); Durieux, Christophe, 73200, GILLY SUR ISERE (FR)
(74) Mandataire: Myon, Gérard Jean-Pierre

(56) Documents cités:
- EP-A- 0 722 063
- EP-A- 1 531 297
- US-A- 3 468 562
- US-A- 4 219 222
- US-B1- 6 199 913

## Description

L'invention concerne un élément femelle de raccord comportant un organe de verrouillage d'un élément mâle, qui s'étend suivant l'axe d'accouplement du raccord. Par ailleurs, l'invention concerne un raccord, pour la jonction de deux conduites de fluide, comportant un tel élément femelle et un élément mâle.

Dans certaines applications de raccord fluidique, en particulier pour les circuits hydrauliques de freinage de véhicule automobile, un raccord doit présenter un faible encombrement radial et les dimensions du conduit de fluide sont relativement réduites. Pour assurer la compacité radiale du raccord et pour permettre la rotation relative de ses éléments mâle et femelle, les organes de verrouillage de l'élément mâle dans l'élément femelle d'un raccord de l'art antérieur sont généralement constitués de billes logées dans l'élément femelle. En position verrouillée, les billes sont maintenues entre un logement de l'élément femelle et une cavité correspondante de l'élément mâle, telle qu'une gorge annulaire. Les billes sont en contact ponctuel avec ces pièces, si bien que, pour des pressions de service élevées, elles transmettent des efforts importants sur de faibles surfaces. Ces efforts conduisent au matage de la surface de l'élément mâle, au niveau de la cavité recevant les billes et du logement de l'élément femelle, ce qui dégrade la qualité du verrouillage du raccord.

US-A-2 344 740 décrit un organe de verrouillage constitué d'une partie de verrouillage cylindrique, d'une partie de raccordement et d'une partie de commande. La partie de raccordement présente une largeur légèrement supérieure à celles des autres parties. L'organe de verrouillage est soumis à un mouvement combiné de pivotement et de translation, qui conserve au raccord une compacité radiale relativement bonne.

Cependant, le contact entre l'élément mâle et la partie de verrouillage n'est réalisé que le long d'un segment linéique, ce qui induit, comme avec des billes, le matage des surfaces en contact, outre un verrouillage relativement peu ferme.

De plus, pour autoriser le mouvement de l'organe de verrouillage, un jeu est ménagé entre la partie de verrouillage cylindrique et le logement du corps du raccord qui la reçoit. Les parties de raccordement et de commande peuvent se déplacer latéralement autour de l'axe du raccord, ce qui risque de désaxer l'organe de verrouillage. Or, une telle position en biais peut entraîner le coincement voire la rupture de cet organe de verrouillage lors des mouvements de verrouillage et de déverrouillage du raccord.

De même, EP-A-0 722 063 décrit un raccord dans lequel la superficie où intervient le contact entre l'élément mâle et la partie de verrouillage de l'organe de verrouillage est relativement restreinte, ce qui induit aussi le matage des surfaces en contact et limite la fermeté du verrouillage.

La présente invention vise notamment à remédier à ces inconvénients, en proposant un élément femelle de raccord compact et présentant une durée de vie élevée.

A cet effet, l'invention a pour objet un élément femelle de raccord comportant :
- un corps comprenant un conduit destiné à recevoir un élément mâle suivant un axe d'accouplement du raccord ;
- au moins un organe de verrouillage présentant une partie de verrouillage apte à établir un contact avec l'élément mâle, une partie de raccordement ainsi qu'une partie de commande reliée à la partie de verrouillage par l'intermédiaire de la partie de raccordement, l'organe de verrouillage s'étendant globalement selon ledit axe et étant mobile, suivant un mouvement combiné de pivotement et de translation selon ledit axe, entre une position verrouillée, dans laquelle la partie de verrouillage est apte à bloquer l'élément mâle dans le corps selon ledit axe, et une position déverrouillée, dans laquelle la partie de verrouillage libère le passage de l'élément mâle dans le conduit ;
- un élément annulaire apte à entraîner l'organe de verrouillage de la position verrouillée à la position déverrouillée , et
- au moins un organe élastique de rappel de l'organe de verrouillage en position verrouillée.

L'élément femelle comporte, en outre, des moyens de guidage latéral de la ou de chaque partie de raccordement et/ou de la ou chaque partie de commande au cours du mouvement de l'organe de verrouillage et la surface de la ou de chaque partie de verrouillage destinée à être en contact avec l'élément mâle présente globalement la forme d'une portion de surface de révolution autour dudit axe et la largeur, selon une direction orthoradiale, de la ou de chaque partie de commande et/ou de la ou de chaque partie de raccordement est inférieure à la largeur de la ou de chaque partie de verrouillage.

Selon d'autres caractéristiques avantageuses mais facultatives de l'invention, prises isolément ou selon toute combinaison techniquement admissible :
- ladite portion de surface de révolution s'étend sur un secteur d'angle supérieur ou égal à 30° par rapport audit axe ;
- chaque partie de verrouillage présente globalement la forme d'une portion de volume de révolution ;
- ladite portion de volume de révolution est formée par deux surfaces tronconiques, dont les génératrices respectives sont inclinées sur ledit axe selon des angles respectifs compris entre 30° et 60° ;
- la ou chaque partie de verrouillage présente une largeur supérieure à son épaisseur ;
- les faces latérales de la ou de chaque partie de verrouillage divergent en s'éloignant dudit conduit ;
- les faces latérales de la ou de chaque partie de raccordement et/ou de la ou de chaque partie de commande sont parallèles entre elles ,
- le corps comprend un logement traversant pour la ou chaque partie de verrouillage, et la ou chaque partie de commande et la ou chaque partie de raccordement sont disposées au niveau de la surface externe du corps de l'élément femelle ;
- le ou chaque logement comporte une surface distale tronconique et inclinée sur ledit axe, selon un angle compris entre 30° et 60° ;
- l'organe de verrouillage en position verrouillée coopère avec les faces latérales de son logement ;
- le ou chaque logement est raccordé à la surface externe du corps par l'intermédiaire d'un congé de raccordement ou d'un chanfrein s'étendant du côté de la ou chaque partie de raccordement ;
- les moyens de guidage comprennent au moins une rainure longitudinale formée dans le corps et apte à loger la partie de raccordement et/ou la partie de commande, de façon à guider latéralement l'organe de verrouillage ;
- la ou chaque rainure présente un fond plat ,
- la partie de commande forme une saillie radiale apte à coopérer en butée avec un épaulement ménagé sur l'élément annulaire ;
- une rondelle est disposée entre l'organe élastique et la ou chaque partie de commande ;
- le corps comporte une butée axiale apte à coopérer avec l'élément annulaire pour limiter le mouvement de l'élément annulaire dans le sens de déverrouillage de l'organe de verrouillage ; et
- l'élément femelle comprend plusieurs organes de verrouillage distincts.

Par ailleurs, l'invention a pour objet un raccord pour la jonction de deux conduites, comportant un élément mâle, caractérisé en ce qu'il comporte un élément femelle tel qu'exposé ci-dessus.

Selon d'autres caractéristiques avantageuses mais facultatives de l'invention, prises isolément ou selon toute combinaison techniquement admissible :
- l'élément mâle présente une surface de révolution apte à coopérer avec l'organe de verrouillage de façon à bloquer l'élément mâle dans le corps suivant ledit axe.
- la partie distale de la gorge de verrouillage présente sensiblement une forme tronconique autour de cet axe dont les génératrices sont inclinées sur cet axe d'un angle compris entre 40° et 50°.

L'invention sera bien comprise et d'autres avantages de celle-ci ressortiront aussi à la lumière de la description qui va suivre, donnée uniquement à titre d'exemple et faite en référence aux dessins annexés, dans lesquels :
- la figure 1 est une section axiale d'un raccord conforme à l'invention en position désaccouplée et comprenant un élément femelle conforme à l'invention ;
- la figure 2 est une vue en perspective et à plus grande échelle d'un organe de verrouillage de l'élément femelle illustré à la figure 1 ;
- la figure 3 est une vue analogue à la figure 1 du raccord de la figure 1 en position accouplée ;
- la figure 4 est une section selon la ligne IV-IV à la figure 3 ;
- la figure 5 est une vue analogue à la figure 3 du raccord de la figure 3 dans une position intermédiaire ;
- la figure 6 est une section selon la ligne VI-VI à la figure 5 ;
- la figure 7 est une section selon la ligne VII-VII à la figure 8 d'une partie de l'élément femelle de la figure 3 ;
- la figure 8 est une vue à plus grande échelle du détail VIII de la figure 3.

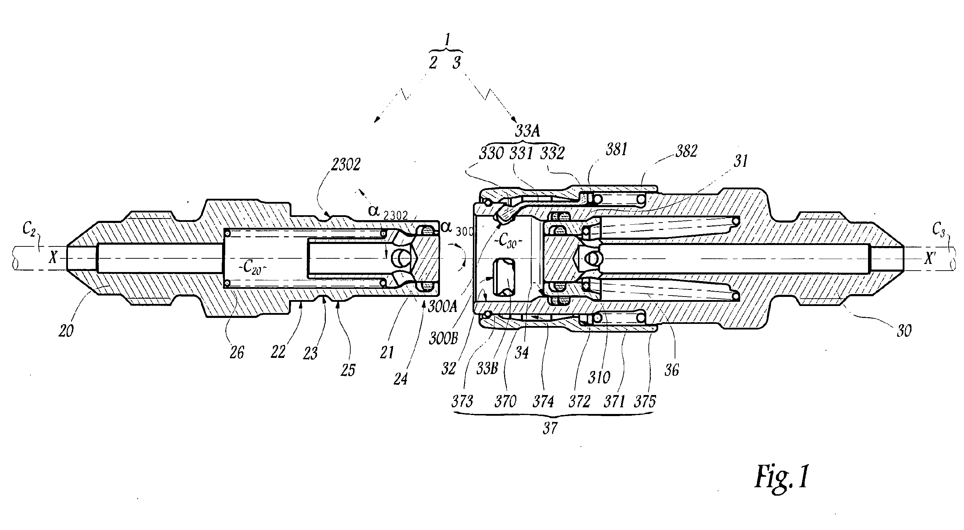

La figure 1 montre un raccord 1 en position désaccouplée comprenant un élément mâle 2, constituant l'élément mâle du raccord 1, et un élément femelle 3. L'élément mâle 2 est relié à une conduite de fluide C₂, représentée en traits mixtes, et l'élément femelle 3 est relié à une conduite de fluide C₃, également représentée en traits mixtes. Le corps 20 de l'élément mâle 2 définit un conduit longitudinal C₂₀ à travers lequel peut s'écouler le fluide. La surface externe de l'élément mâle 2 présente une symétrie de révolution autour d'un axe X-X' qui correspond à la direction d'emmanchement de l'élément mâle 2 dans l'élément femelle 3. La surface radiale externe de l'élément mâle 2 comporte une portion proximale 22 et une portion distale 24, entre lesquelles se trouvent une gorge annulaire 23 et une collerette annulaire 25.

Une surface est ici qualifiée de « radiale » ou « d'axiale » selon l'orientation d'une normale à cette surface par rapport à l'axe X-X'. De plus, une surface radiale est qualifiée « d'interne » si elle est tournée vers l'axe X-X' et « d'externe » si elle est tournée dans le sens opposé. L'adjectif « proximal » désigne un élément d'une pièce proche de la conduite à laquelle est relié l'élément de raccord associé à cette pièce, tandis que l'adjectif « distal » désigne un élément de la pièce qui en est plus éloigné.

La gorge 23 présente une surface distale 2302 externe et de forme sensiblement tronconique, dont la génératrice est inclinée sur l'axe X-X' d'un angle α₂₃₀₂ d'environ 45°. En pratique, l'angle α₂₃₀₂ de la gorge 23 peut être compris entre 30° et 60°.

Le corps 30 de l'élément femelle 3 définit un conduit C₃₀ de forme complémentaire aux portions proximale 22 et distale 24 du corps 20 de l'élément mâle 2, de façon à permettre l'accouplement du raccord 1. Le conduit C₃₀ présente une symétrie de révolution autour de l'axe X-X'. Le conduit C₃₀ comprend un alésage distal 32 et un alésage proximal 34, réalisés dans le corps 30 et dont les diamètres correspondent, respectivement et au jeu de montage près, à ceux des portions proximale 22 et distale 24 de l'élément mâle 2.

L'accouplement de l'élément mâle 2 dans l'élément femelle 3 est réalisé par une translation de l'une et/ou l'autre de ces deux pièces suivant l'axe X-X'. Dans la position désaccouplée illustrée à la figure 1, l'élément mâle 2 et le conduit C₃₀ s'étendent axialement le long de l'axe X-X'. Le conduit C₂₀ est obturé par un clapet 21 situé à son extrémité distale et le conduit C₃₀ est obturé par un clapet 31.

Les clapets 21 et 31 sont montés mobiles en translation selon l'axe X-X'. Lors de l'accouplement du raccord 1, le clapet 21 rencontre un poussoir 310 fixe qui le repousse vers la partie proximale du conduit C₂₀, alors que le clapet 31 est repoussé par la face axiale distale du corps 20 vers la partie proximale du conduit C₃₀. Les clapets 21 et 31 repoussent respectivement deux ressorts de compression 26 et 36. Les ressorts 26 et 36 exercent une force de rappel élastique respectivement sur les clapets 21 et 31 vers leur position d'obturation respective des conduits C₂₀ et C₃₀.

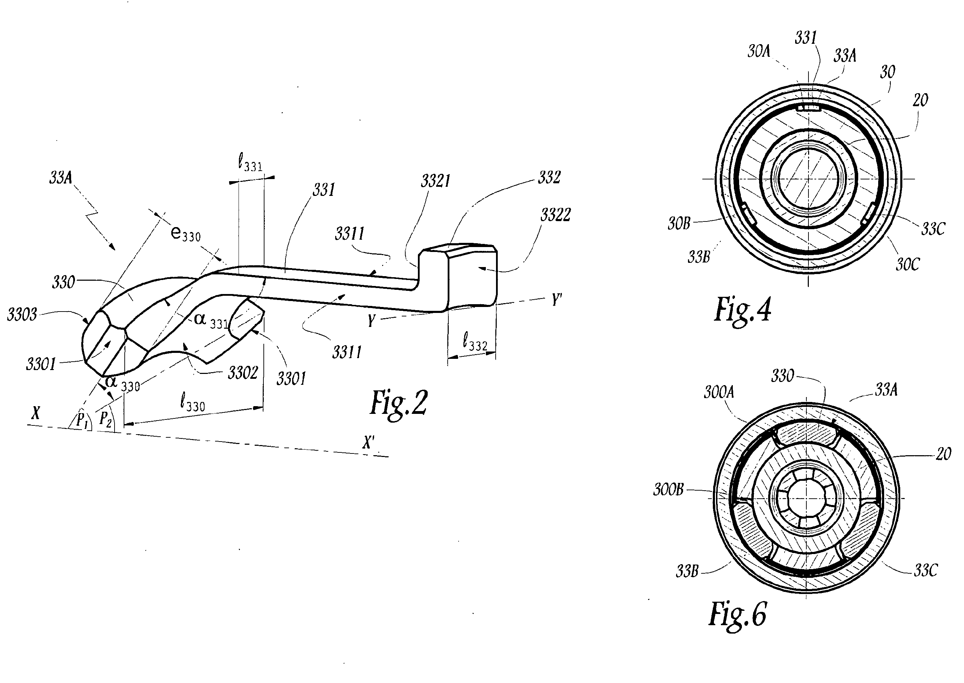

L'élément femelle 3 comporte trois organes de verrouillage en position accouplée, dont deux sont visibles à la figure 1 avec les références 33A et 33B, le troisième étant visible aux figures 4 et 6 avec la référence 33C. Ces organes de verrouillage sont identiques entre eux, si bien que seul l'organe 33A est décrit en détail ci-après. Les organes 33A, 33B et 33C forment dans ce cas trois pièces distinctes.

L'organe 33A s'étend globalement selon l'axe X-X' et il présente trois parties distinctes, à savoir une partie distale dite de verrouillage 330, une partie proximale dite de commande 332 et une partie intermédiaire dite de raccordement 331. La partie 330 est dite de verrouillage, car elle intervient lors du verrouillage de l'élément mâle 2 dans l'élément femelle 3, comme cela est détaillé ci-après. La partie 332 est dite de commande, car elle intervient dans le déplacement de l'organe 33A par rapport au corps 30. La partie 331 est dite de raccordement, car elle est située entre les parties 330 et 332.

Comme le montre la figure 2, la partie de verrouillage 330 a la forme d'une portion de tore autour de l'axe X-X', cette portion étant délimitée par deux plans méridiens P₁ et P₂. Par tore on entend un volume de révolution engendré par une circonférence tournant autour d'un axe situé dans son plan, tel l'axe X-X', et ne coupant pas la circonférence. Les plans P₁ et P₂ forment entre eux un angle α₃₃₀ centré sur l'axe X-X' et valant environ 60°. En pratique, l'angle α₃₃₀ peut être compris entre 30° et 80°.

La partie de verrouillage 330 comprend deux surfaces de révolution tronconiques, à savoir une surface proximale interne 3302 et une surface distale externe 3303. Les surfaces 3302 et 3303 sont limitées par les plans méridiens P₁ et P₂ et s'étendent donc selon un angle sensiblement égal à l'angle α₃₃₀. De plus, les génératrices des surfaces proximale 3302 et distale 3303 forment respectivement des angles α₃₃₀₂ et α₃₃₀₃ avec l'axe X-X'. En l'occurrence, les angles α₃₃₀₂ et α₃₃₀₃ sont sensiblement égaux entre eux.

De même, la partie de raccordement 331 et la partie de commande 332 sont formées par des portions de volumes de révolution autour de l'axe X-X'. Cependant, ces portions sont délimitées angulairement par deux plans parallèles et elles sont moins étendues que la portion formant la partie de verrouillage 330, si bien que les largeurs ℓ₃₃₂ et ℓ₃₃₁ des parties 332 et 331, ici égales selon une direction orthoradiale, sont sensiblement inférieures à la largeur ℓ₃₃₀ de la partie 330. Par « orthoradiale » on désigne une direction orthogonale aux directions axiale selon l'axe X-X' et radiale. Une direction orthoradiale est par exemple perpendiculaire au plan de la figure 1. La largeur ℓ₃₃₂, comme la largeur ℓ₃₃₁, vaut ici 1,5 mm, tandis que la largeur ℓ₃₃₀ vaut 4,5 mm. Par ailleurs, la partie de verrouillage 330 présente une épaisseur e₃₃₀, d'environ 1,2 mm, qui est nettement inférieure à sa largeur ℓ₃₃₀, en l'occurrence d'un facteur 3,75. Globalement, l'organe 33A est formé de portions de volumes de révolution raccordées entre elles.

Selon une variante non représentée, les organes de verrouillages de l'élément femelle ont des parties de commande formées, à la différence du mode de réalisation illustré, par une bague de commande de forme annulaire et commune à tous les organes de verrouillage. En d'autres termes, chaque organe de verrouillage comprend, outre une partie de verrouillage et une partie de raccordement, une partie de commande commune aux autres organes de verrouillage. Ces organes de verrouillages sont ainsi solidaires et ils forment ensemble une seule et même pièce, tandis que les organes 33A, 33B et 33C forment trois pièces distinctes. Leurs parties de verrouillage et leurs parties de raccordement sont semblables aux parties correspondantes décrites ci-dessus en relation avec les figures. La bague de commande annulaire présente une symétrie de révolution globalement autour de l'axe d'accouplement du raccord. Elle peut être globalement de forme torique ou de forme cylindrique à base circulaire.

De même, dans cette variante, la largeur, selon une direction orthoradiale, de chaque partie de raccordement est inférieure à la largeur de chaque partie de verrouillage, ce qui permet de limiter l'encombrement radial de l'élément femelle. De plus, cette structure facilite le pivotement de chaque organe de verrouillage. En effet, chaque partie de raccordement est apte à se déformer en flexion sous l'effet des efforts exercés sur la partie de verrouillage correspondante, tandis que la partie de commande commune se déplace essentiellement en translation le long de l'axe d'accouplement et autour du corps de l'élément femelle. Par ailleurs, la largeur maximale, selon une direction orthoradiale correspond à la circonférence de la bague de commande.

L'élément femelle 3 comporte, en outre, une bague de commande 37 en forme d'élément annulaire entourant la partie distale de l'élément femelle 3. La bague 37 comprend une partie distale 370 et une partie proximale 371 qui sont montées en liaison pivot glissant sur le corps 30, notamment au niveau de sièges annulaires 373 et 375. La bague 37 présente une symétrie de révolution autour de l'axe X-X' et la surface radiale interne de sa partie distale 370 définit un logement 374, apte à recevoir la partie de raccordement 331 et la partie de verrouillage 330 de l'organe 33A en position déverrouillée, ou les parties correspondantes de l'organe 33B ou 33C. Un épaulement 372 est formé à la jonction des parties distale 370 et proximale 371. L'épaulement 372 peut venir en appui contre la partie de commande 332 de l'organe 33A, en saillie radiale par rapport à la partie de raccordement 331, si bien que la bague 37 est apte à entraîner les organes 33A, 33B et 33C en direction de la conduite C₃ lorsque la bague 37 est déplacée vers la conduite C₃.

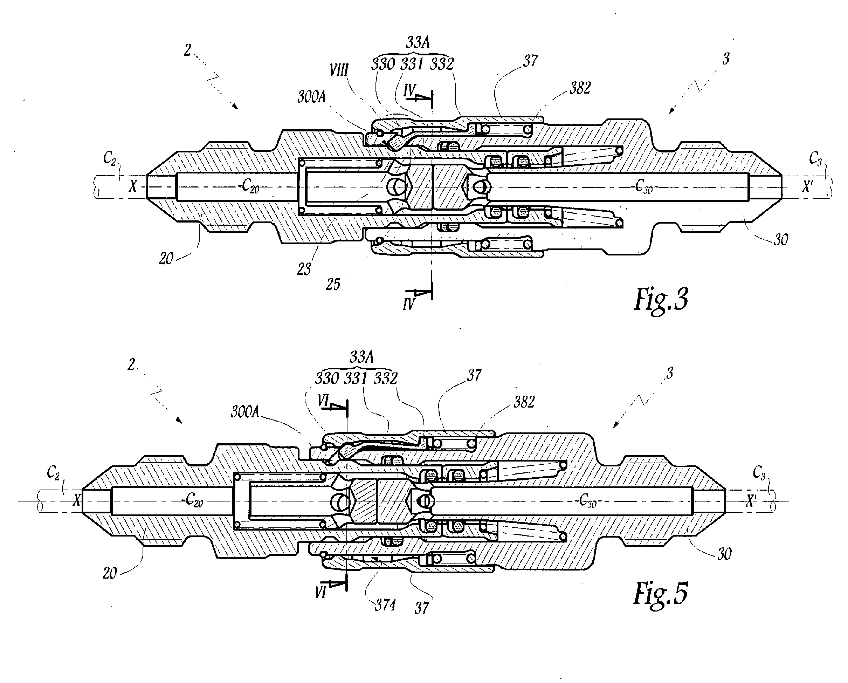

L'organe 33A est monté mobile entre une position verrouillée, dans laquelle la partie de verrouillage 330 bloque l'élément mâle 2 selon l'axe X-X' dans le corps 30, comme le montre la figure 3, et une position déverrouillée, dans laquelle la partie de verrouillage 330 libère le passage de l'élément mâle 2 dans le conduit C₃₀, comme le montre la figure 5. L'organe 33A est entraîné vers sa position déverrouillée par la bague 37, dont l'épaulement 372 exerce sur la partie de commande 332 une force selon l'axe X-X' dirigée vers la conduite C₃.

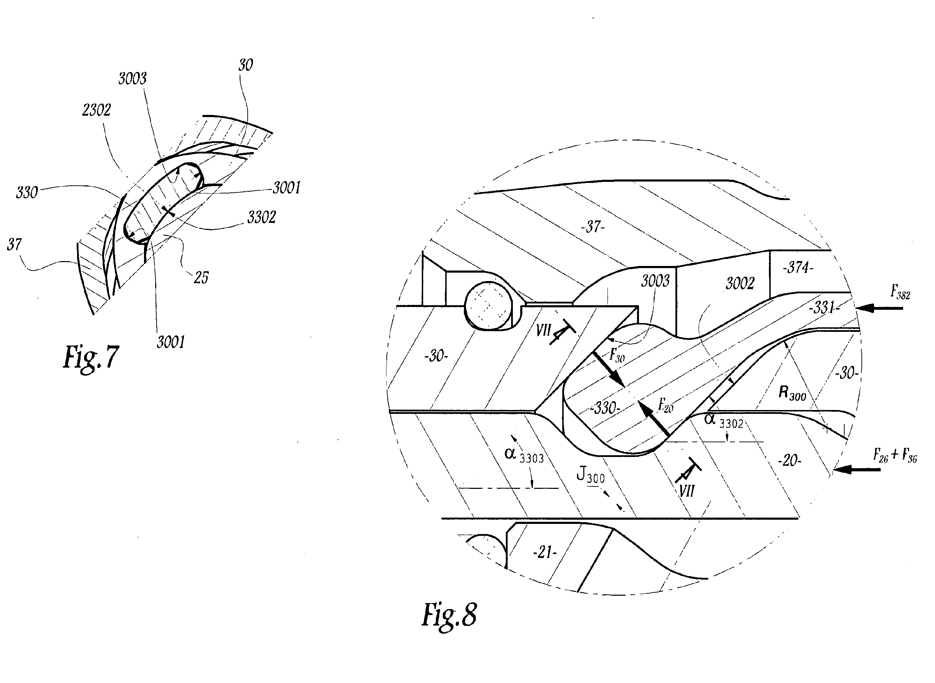

Un ressort de compression 382 qui est logé entre le corps 30 et la partie proximale 371 de la bague 37 exerce une force élastique de rappel F₃₈₂, symbolisée sur la figure 8, de l'organe 33A vers sa position verrouillée. Une rondelle 381 est montée entre le ressort 382 et la partie de commande 332 pour répartir l'effort exercé par le ressort 382 uniformément sur les parties de commande de type 332 des organes 33A, 33B et 33C.

La partie distale du corps 30 comprend des logements identiques, dont deux sont visibles à la figure 1 avec les références 300A et 300B, destinés à recevoir respectivement la partie de verrouillage 330 de l'organe 33A et la partie correspondante de l'organe 33B. La partie de raccordement 331 et la partie de commande 332 sont globalement disposées au niveau, et en l'occurrence autour, de la surface radiale externe du corps 30. Les dimensions du logement 300A permettent le dégagement de l'organe 33A vers sa position déverrouillée. Chaque logement de type 300A et 300B est constitué d'une lumière traversant le corps 30. Le logement 300A est raccordé à la surface externe du corps 30 par l'intermédiaire d'un congé de raccordement de rayon R₃₀₀ s'étendant du côté de la partie de raccordement 331. En variante, on peut prévoir un autre type de raccordement, tel qu'un chanfrein.

La géométrie du logement 300A permet à la partie de verrouillage 330 de pénétrer, au moins partiellement, dans le volume défini par la partie distale du conduit C₃₀ et ainsi d'accoster l'élément mâle 2. Comme le montre la figure 7, un logement de type 300 est défini, d'une part, par une surface tronconique, distale 3003 qui s'étend selon un angle α₃₀₀ d'environ 45° par rapport à l'axe X-X', une génératrice de la surface tronconique distale 3003 et l'axe X-X' convergeant du côté distal de l'élément femelle 3. En pratique, l'angle α₃₀₀ peut être compris entre 30° et 60°. L'angle α₃₀₀ est sensiblement égal à l'angle α₃₃₀₃ de la surface distale 3303 de la partie de verrouillage 330, de façon à assurer la coopération de la surface 3003 avec la surface correspondante de la partie de verrouillage 330. D'autre part, le logement 300 est défini par une surface 3002 formant un angle sensiblement égal à l'angle α₃₃₀₂ avec l'axe X-X'. On notera que la surface proximale 3002 peut présenter une forme tronconique ou non.

Comme le montre la figure 2, la partie de verrouillage 330 forme un coude d'angle α₃₃₁ avec la partie de raccordement 331. L'angle α₃₃₁ vaut environ 135°. En pratique, l'angle α₃₃₁ peut être compris entre 120° et 150° en fonction de la valeur de l'angle α₃₃₀₂. L'angle α₃₃₁ est donc complémentaire à l'angle α₃₀₀ du logement 300A. Ainsi, en position verrouillée de l'organe 33A, c'est-à-dire lorsque sa surface distale 3303 est en contact avec la surface distale 3003 du logement 300A, la partie de raccordement 331 s'étend globalement selon l'axe X-X' ce qui donne une bonne compacité radiale à l'élément femelle 3. Un congé de raccordement permet de répartir les contraintes mécaniques transmises entre les parties 330 et 331 et présente donc une bonne résistance à ces contraintes.

Comme le montrent les figures 7 et 8, en position verrouillée, la surface proximale 3302 de la partie de verrouillage 330 est en contact surfacique avec la surface distale 2302 de la gorge 23. Cette surface distale 2302 est une surface de révolution. L'angle α₂₃₀₂ de la surface distale 2302 est égal à l'angle α₃₃₀₂ de la surface proximale 3302, donc à l'angle α₃₃₀₃ de la surface distale 3303, de façon à réaliser des contacts sur une superficie étendue.

Les efforts en position accouplée de l'élément femelle 3 sur l'élément mâle 2 sont transmis principalement au niveau de ces surfaces de contact. Dans la mesure où la superficie de contact est relativement étendue, le matage de la surface de l'élément mâle 2 par chaque organe de verrouillage 33A et équivalent se trouve réduit voire supprimé. La durée de vie et la fiabilité du raccord objet de l'invention s'en trouvent augmentées.

La surface externe du corps 30 présente trois rainures longitudinales ou axiales 30A, 30B et 30C qui sont aptes à loger chacune la partie de raccordement de type 331 et la partie de commande de type 332 de l'un des organes de verrouillage 33A, 33B et 33C. Comme le montre la figure 4, les rainures 30A à 30C ont un fond plat, des faces latérales ou côtés parallèles entre elles et perpendiculaires au fond plat, et une largeur complémentaire à celle des parties de raccordement de type 331 et des parties de commande de type 332. La partie de raccordement 331 et la partie de commande 332 de chaque organe de type 33 sont donc guidées latéralement par les côtés des rainures 30A à 30C au cours des mouvements des organes de verrouillage 33A à 33C. Par « latérale » on désigne une direction sensiblement orthoradiale.

En pratique, les côtés des rainures 30A forment des moyens de guidage latéral des faces latérales 3311 parallèles de la partie de raccordement 331 et des faces latérales parallèles de la partie de commande 332. Les faces latérales de la partie 332 s'étendent ici respectivement dans les mêmes plans que les faces latérales 3311 de la partie 331. En d'autres termes, les faces latérales de la partie 332 prolongent les faces latérales 3311. En variante, seule la partie de raccordement 331 ou la partie de commande 332 est guidée latéralement par les rainures 30A à 30C.

Comme le montre la figure 2, la partie de verrouillage 330 présente des faces latérales 3301 qui divergent en s'éloignant du conduit C₃₀ et de l'axe X-X', ce qui facilite le dégagement radial de l'organe 33A hors de sa position verrouillée dans le logement 300A. Dans le même but, le logement 300A présente des faces latérales 3001 divergentes en s'éloignant de l'axe X-X'. Ce dégagement radial est rendu possible par un léger pivotement de l'organe 33A autour d'un axe Y-Y' illustré à la figure 2 et situé au contact de la partie de commande 332 avec le fond de la rainure 30A et perpendiculaire au plan de la figure 5.

En position verrouillée, l'organe 33A coopère sensiblement avec le logement 300A, notamment au niveau de ses surfaces latérales 3301 et distale 3303. Un faible jeu J₃₀₀ est prévu entre les surfaces proximales 3302 et 3002. Une telle géométrie des composants du raccord 1 facilite donc l'engagement et le dégagement de l'organe de verrouillage 33A dans le logement 300A.

La rainure 30A forme donc un moyen de guidage latéral pour l'organe 33A, et plus particulièrement pour sa partie de commande 332 et pour la partie proximale de sa partie de raccordement 331, dans son mouvement combiné de pivotement autour de l'axe Y-Y' et de translation suivant l'axe X-X', ce qui conserve à l'organe 33A son orientation longitudinale et la précision de son positionnement, malgré l'augmentation du jeu entre le logement 300A et les faces latérales divergentes 3301 de la partie de verrouillage 330. Alternativement, les rainures de guidage longitudinales peuvent être réalisées dans la bague 37, laquelle est alors prévue solidaire en rotation du corps 30. En d'autres termes, les parties 331 et 332 sont aptes à être guidées latéralement dans la rainure 30A.

Lors de l'accouplement, l'élément mâle 2 est amené, depuis sa position illustrée à la figure 1, jusqu'à sa position verrouillée, illustrée par la figure 3. La surface annulaire distale 24 s'engage dans l'alésage proximal 34 et la collerette 25 arrive en butée contre l'organe 33A, qui se trouve en position verrouillée, repoussé par le ressort 382. La collerette 25 exerce alors un effort sur la partie de verrouillage 330, provoquant ainsi le pivotement de l'organe 33A et son recul en translation dans la rainure 30A selon l'axe X-X' vers la conduite C₃. La translation de l'organe 33A entraîne celle de la rondelle 381 et de la bague 37 qui lui est solidaire, par l'intermédiaire de la partie de commande 332 et à l'encontre de l'effort F₃₈₂ exercé par le ressort 382. La partie de verrouillage 330 est ainsi escamotée hors du passage de l'élément mâle 2 dans le conduit C₃₀. Le mouvement de l'organe 33A entre les positions verrouillée et déverrouillée, composé d'un pivotement et d'une translation, est guidé latéralement par la rainure 30A.

Lorsque l'élément mâle 2 atteint sa position d'accouplement, dans laquelle les clapets 21 et 31 ont été repoussés à l'encontre des ressorts de compression 26 et 36 si bien que le fluide peut circuler, l'organe 33A est repoussé dans le conduit C₃₀, vers la gorge 23 par le ressort 382 par l'intermédiaire de la rondelle 381. Le ressort 382 repousse l'organe 33A selon l'axe X-X' et le fait pivoter jusqu'à ce que la partie de raccordement 331 arrive en position sensiblement axiale en butée contre le fond de la rainure 30A et que la partie de verrouillage 330 s'interpose entre le corps 30 et la surface distale 2302 de la gorge 23. L'organe 33A est alors en position verrouillée et bloque axialement l'élément mâle 2 dans l'élément femelle 3 empêchant son retrait hors de l'élément femelle 3. L'accouplement du raccord est automatique et l'opérateur n'a pas besoin d'actionner la bague 37.

En service, l'élément mâle 2 subit des efforts de désaccouplement exercés par exemple par les ressorts 26 et 36 ou encore par le fluide circulant dans les conduits C₂₀ et C₃₀. Cependant, comme le montre la figure 8, les forces F₃₈₂, F₂₆ et F₃₆ exercées par les ressorts 382, 26 et 36 sur l'élément mâle 2 et tout effort de retrait de l'élément mâle 2 contribuent à plaquer l'élément mâle 2 contre la partie de verrouillage 330 et la partie de verrouillage 330 contre le corps 30. En effet, les efforts F₂₀ et F₃₀ exercés par l'élément mâle 2 et le corps 30 sur l'organe 33A sont appliqués sur des surfaces tronconiques de même orientation, ce qui contribue au maintien de l'organe 33A par « coincement » en position verrouillée. L'inclinaison de ces surfaces valant sensiblement 45° permet un coincement optimal de la partie 330.

Dans la mesure où la partie de verrouillage 330 de chaque organe 33A, 33B ou 33C s'étend sur un secteur angulaire d'environ 60°, selon l'angle α₃₃₀ délimité par les plans méridiens P₁ et P₂, la surface de contact entre le corps 20 et les trois organes 33A, 33B et 33C représente environ 180° de secteur angulaire cumulé, c'est-à-dire la moitié de la surface tronconique de la surface distale 2302 de la gorge 23. De même, la surface de contact entre le corps 30 et les trois organes 33A, 33B et 33C représente environ 180° de secteur angulaire cumulé. Par conséquent, le matage de l'élément mâle 2 et du corps de l'élément femelle 3 est fortement réduit, tandis que sa longévité et sa fiabilité sont augmentées par rapport aux raccords de l'art antérieur.

De plus, la compacité radiale de l'élément femelle 3 demeure sensiblement inchangée malgré cette augmentation de la surface de contact par rapport aux éléments femelles de l'art antérieur. De même, la compacité axiale de l'élément femelle 3 n'est pas affectée, dans la mesure où la partie de verrouillage 330 présente une épaisseur α₃₃₀ bien inférieure à sa largeur ℓ₃₃₀. De même, les largeurs ℓ₃₃₂ et ℓ₃₃₁, relativement faibles devant la largeur ℓ₃₃₀, requièrent pour le guidage des parties 331 et 332 une rainure 30A peu profonde, ce qui évite, pour une surface équivalente de contact entre élément mâle et organe de verrouillage, de fragiliser le corps 30 et confère à l'élément femelle 3 une compacité radiale relativement élevée.

L'angle α₃₃₀ définissant l'étendue angulaire de la partie de verrouillage 330 est sélectionné pour optimiser la résistance mécanique des pièces du raccord. Un angle α₃₃₀ d'environ 60° permet ainsi d'assurer une surface de contact relativement étendue, de façon à réduire le matage de l'élément mâle 2 et de l'élément femelle 3, tout en évitant de fragiliser le corps 30, soumis aux efforts de verrouillage et de fonctionnement, en limitant l'étendue des logements 300A ou 300B. La géométrie torique de la partie de verrouillage 330 avec des surfaces 3302 et 3303 de même orientation permet de limiter la fragilisation du corps 30 tout en assurant une surface de contact étendue entre l'organe 33A et l'élément mâle 2.

En position accouplée et pendant les phases d'accouplement ou de désaccouplement, lorsque les éléments mâle 2 et femelle 3 tournent l'un par rapport à l'autre autour de l'axe X-X' ou si la bague 37 est soumise à rotation, le guidage latéral de chaque organe 33A, 33B ou 33C par un logement de type 300A, 300B ou 300C et/ou par les rainures 30A à 30C permet d'éviter toute déformation critique de l'organe 33A, 33B ou 33C au niveau de ses parties étroites 331 et 332. Ainsi, l'organe 33A conserve son alignement longitudinal induisant un mouvement de l'organe 33A sans coincement et en vue du blocage axial optimal de l'élément mâle 2. En effet, les surfaces de guidage latérales parallèles permettent un bon guidage et une bonne transmission des efforts latéraux subis par chaque organe de verrouillage au corps 30.

Pour désaccoupler le raccord, un opérateur déplace la bague 37 dans le sens de déverrouillage de l'organe 33A, c'est-à-dire qu'il la repousse à l'encontre du ressort 382 et des ressorts 26 et 36 vers la conduite C₃, la bague 37 entraînant avec elle l'organe 33A par l'intermédiaire de sa partie de commande 332. L'actionnement de la bague 37 consiste à avancer légèrement l'élément mâle 2 vers la conduite C₃ afin de diminuer le jeu J₃₀₀ ce qui permet un débattement de l'organe 33A, donc son dégagement. Le recul de l'organe 33A vers la conduite C₃ le place dans une position où il peut pivoter. L'organe 33A se déplace, entre la position verrouillée et la position déverrouillée, selon un mouvement combiné de translation selon l'axe X-X' et de pivotement sensiblement autour de l'axe Y-Y'. La partie de verrouillage 330 s'escamote alors, hors de la gorge 23 et hors du passage de l'élément mâle 2 dans le conduit C₃₀, vers le logement 374. La géométrie torique de la partie de verrouillage 330, et en particulier de la surface de révolution 3303, facilite le mouvement de l'organe 33A dans le logement 300A.

L'élément mâle 2 est retiré de l'élément femelle 3 sous les actions conjuguées d'un opérateur et des efforts de fermetures des clapets 21 et 31 exercés par les ressorts 26 et 36. Lorsque l'élément mâle 2 est retiré et la bague 37 relâchée, le ressort 382 repousse l'organe 33A en direction du conduit C₃₀, en position verrouillée, qu'il atteint lorsque sa partie 331 parvient en butée contre le fond de la rainure 30A et la surface 3303 demeure en contact avec la surface 3003.

Comme le montre la figure 5, avec le pivotement de l'organe 33A par rapport à la position verrouillée, la partie de raccordement 331 quitte partiellement la rainure 30A et la partie de commande 332 demeure au contact de l'épaulement 372.

Le contact de l'épaulement 372 sur la partie de commande 332 est réalisé entre une surface distale 3321 de la partie de commande 332 de largeur ℓ₃₃₂ et une surface proximale de l'épaulement 372 de géométrie annulaire. La position selon la direction radiale de ce contact par rapport à l'axe X-X' dépend donc de la largeur ℓ₃₃₂. La position de l'axe Y-Y' dépend de la forme du fond et de la profondeur de la rainure 30A. L'axe Y-Y' se trouve du côté d'une surface axiale proximale 3322 de la partie de commande 332. Comme le fond de la rainure 30A est plat, l'axe Y-Y' se trouve plus près de l'axe X-X' que si le fond était arrondi, car le contact entre la surface interne arrondie des parties 331 et 332 se produit sur le fond de la rainure 30A.

La forme du fond, la profondeur de la rainure 30A et la largeur ℓ₃₃₂ faible induisent le fait que les contacts entre bague 37 et organe 33A sont situés au-delà et à distance de l'axe de pivotement Y-Y' de l'organe 33A, en s'éloignant de l'axe X-X'. Par conséquent, ces points de contact permettent un pivotement efficace de l'organe 33A dans le sens du déverrouillage par la bague 37.

Selon une variante non représentée, le corps 30 de l'élément femelle 3 peut comporter une butée axiale apte à coopérer avec la bague 37 pour limiter son mouvement de recul vers la conduite C₃₀ et donc limiter le mouvement de l'organe de verrouillage vers sa position déverrouillée. Cela permet de limiter le recul de l'organe de verrouillage, et donc ses sollicitations.

Selon une autre variante non représentée, la bague peut ne pas suivre le mouvement de translation de l'organe de verrouillage au cours de l'accouplement. Pour cela, la rondelle doit être libre de se déplacer sans la bague à l'encontre du ressort de rappel lorsque l'organe de verrouillage est repoussé par la collerette de l'élément mâle en cours d'emmanchement, puis de repousser l'organe de verrouillage en position verrouillée sous l'action du ressort.

## Revendications

1. Elément femelle (3) de raccord (1) comportant :
- un corps (30) comprenant un conduit (C₃₀) destiné à recevoir un élément mâle (2) suivant un axe (X-X') d'accouplement du raccord (1) ;
- au moins un organe de verrouillage (33A, 33B, 33C) présentant une partie de verrouillage (330) apte à établir un contact avec l'élément mâle (2), une partie de raccordement (331) ainsi qu'une partie de commande (332) reliée à la partie de verrouillage (330) par l'intermédiaire de la partie de raccordement (331), l'organe de verrouillage (33A, 33B, 33C) s'étendant globalement selon ledit axe (X-X') et étant mobile, suivant un mouvement combiné de pivotement (Y-Y') et de translation selon ledit axe (X-X'), entre une position verrouillée, dans laquelle la partie de verrouillage (330) est apte à bloquer l'élément mâle (2) dans le corps (30) selon ledit axe (X-X'), et une position déverrouillée, dans laquelle la partie de verrouillage (330) libère le passage de l'élément mâle (2) dans le conduit (C₃₀) ;
- un élément annulaire (37) apte à entraîner l'organe de verrouillage (33A, 33B, 33C) de la position verrouillée à la position déverrouillée ; et
- au moins un organe élastique (382) de rappel de l'organe de verrouillage (33A, 33B, 33C) en position verrouillée,
l'élément femelle (3) comportant, en outre, des moyens (30A, 30B, 30C) de guidage latéral de la ou de chaque partie de raccordement (331) et/ou de la ou chaque partie de commande (332) au cours du mouvement de l'organe de verrouillage (33A, 33B, 33C), la surface (3302) de la ou de chaque partie de verrouillage (330) destinée à être en contact avec l'élément mâle (2) présentant globalement la forme d'une portion de surface de révolution autour dudit axe (X-X'), **caractérisé en ce que** la largeur (ℓ ₃₃₂ et/ou ℓ ₃₃₁), selon une direction orthoradiale (Y-Y') c'est-à-dire circonférentielle, de la ou chaque partie de commande (332) et/ou de la ou de chaque partie de raccordement (331) est inférieure à la largeur (ℓ ₃₃₀) de la ou de chaque partie de verrouillage (330).

2. Elément femelle (3) selon la revendication 1, **caractérisé en ce** ladite portion de surface de révolution s'étend sur un secteur d'angle (α₃₃₀) supérieur ou égal à 30° par rapport audit axe (X-X').

3. Elément femelle (3) selon la revendication 1 ou 2, **caractérisé en ce que** chaque partie de verrouillage (330) présente globalement la forme d'une portion de volume de révolution.

4. Elément femelle (3) selon la revendication 3, **caractérisé en ce que** ladite portion de volume de révolution est formée par deux surfaces tronconiques (3302, 3303), dont les génératrices respectives sont inclinées sur ledit axe (X-X') selon des angles respectifs (α₃₃₀₂, α₃₃₀₃) compris entre 30° et 60°.

5. Elément femelle (3) selon l'une des revendications précédentes, **caractérisé en ce que** la ou chaque partie de verrouillage (330) présente une largeur (ℓ ₃₃₀) supérieure à son épaisseur (e₃₃₀).

6. Elément femelle (3) selon l'une des revendications précédentes, **caractérisé en ce que** les faces latérales (3301) de la ou de chaque partie de verrouillage (330) divergent (α₃₃₀) en s'éloignant dudit conduit (C₃₀).

7. Elément femelle (3) selon l'une des revendications précédentes, **caractérisé en ce que** le corps (30) comprend un logement (300A, 300B) traversant pour la ou chaque partie de verrouillage (330), et **en ce que** la ou chaque partie de commande (332) et la ou chaque partie de raccordement (331) sont disposées au niveau de la surface externe du corps (30) de l'élément femelle (3).

8. Elément femelle (3) selon la revendication 7, **caractérisé en ce que** l'organe de verrouillage (33A, 33B, 33C) en position verrouillée coopère avec les faces latérales (3001) de son logement (300A, 300B).

9. Elément femelle (3) selon l'une des revendications précédentes, **caractérisé en ce que** les moyens de guidage comprennent au moins une rainure longitudinale (30A, 30B, 30C) formée dans le corps (30) et apte à loger la partie de raccordement (331) et/ou la partie de commande (332), de façon à guider latéralement l'organe de verrouillage (33A, 33B, 33C).

10. Elément femelle (3) selon la revendication 9, **caractérisé en ce que** la ou chaque rainure (30A, 30B, 30C) présente un fond plat.

11. Elément femelle (3) selon l'une des revendications précédentes, **caractérisé en ce que** la partie de commande (332) forme une saillie radiale apte à coopérer en butée avec un épaulement (372) ménagé sur l'élément annulaire (37).

12. Elément femelle (3) selon l'une des revendications précédentes, **caractérisé en ce qu'**une rondelle est disposée entre l'organe élastique (382) et la ou chaque partie de commande (332).

13. Elément femelle selon l'une des revendications précédentes, **caractérisé en ce que** le corps (30) comporte une butée axiale apte à coopérer avec l'élément annulaire (37) pour limiter le mouvement de l'élément annulaire (37) dans le sens de déverrouillage de l'organe de verrouillage (33A, 33B, 33C).

14. Elément femelle (3) selon l'une des revendications précédentes, **caractérisé en ce qu'**il comprend plusieurs organes de verrouillage (33A, 33B, 33C) distincts.

15. Raccord (1) pour la jonction de deux conduites (C₂, C₃), comportant un élément mâle (2), **caractérisé en ce qu'**il comporte un élément femelle (3) selon l'une des revendications précédentes.

## Claims

1. A female element (3) of a coupling (1), the female element comprising:
. a body (30) having a duct (C₃₀) for receiving a male element (2) along a coupling axis (X-X') of the coupling (1);
. at least one locking member (33A, 33B, 33C) presenting a locking portion (330) suitable for establishing contact with the male element (2), a connecting portion (331 and a control portion (332) connected to the locking portion (330) via the connecting portion (331), the locking member (33A, 33B, 33C) extending generally along said axis (X-X') and being movable with combined movement in pivoting (Y-Y') and in translation along said axis (X-X') between a locked position in which the locking portion (330) is suitable for blocking the male element (2) in the body (30) along said axis (X-X'), and an unlocked position in which the locking portion (330) releases the passage for the male element (2) in the duct (C₃₀);
. an annular element (37) suitable for driving the locking member (33A, 33B, 33C) from the locked position to the unlocked position; and
. at least one resilient member (382) for returning the locking member (33A, 33B, 33C) to the locked position;
the female element (3) further comprising lateral guide means (30A, 30B, 30C) for guiding the or each connecting portion (331) and/or the or each control portion (332) during the movement of the locking member (33A, 33B, 33C), the surface (3302) of the or each locking portion (330) that is to come into contact with the male element (2) presenting generally the shape of a portion of a surface of revolution about said axis (X-X'), the female element being **characterized in that** the width (ℓ₃₃₂ and/or ℓ₃₃₁) in a circumferential direction (Y-Y') of the or each control portion (332) and/or of the or each connecting portion (331) is less than the width (ℓ₃₃₀) of the or each locking portion (330).

2. A female element (3) according to claim 1, **characterized in that** in said portion of the surface of revolution extends over a sector of angle (α₃₃₀) greater than or equal to 30° relative to said axis (X-X').

3. A female element (3) according to claim 1 or claim 2, **characterized in that** each locking portion (330) generally presents the shape of a portion of a volume of revolution.

4. A female element (3) according to claim 3, **characterized in that** said portion of a volume of revolution is formed by two frustoconical surfaces (3302, 3303) having respective generator lines that are inclined relative to said axis (X-X') at respective angles (α₃₃₀₂, α₃₃₀₃) lying in the range 30° to 60°.

5. A female element (3) according to any preceding claim, **characterized in that** the or each locking portion (330) presents a width (α₃₃₀) that is greater than its thickness (e₃₃₀).

6. A female element (3) according to any preceding claim, **characterized in that** the lateral faces (3301) of the or each locking portion (330) diverge (α₃₃₀) going away from said duct (C₃₀).

7. A female element (3) according to any preceding claim, **characterized in that** the body (30) includes a through housing (300A, 300B) for the or each locking portion (330), and **in that** the or each control portion (332) and the or each connecting portion (331) are placed at the outer surface of the body (30) of the female element (3).

8. A female element (3) according to claim 7, **characterized in that**, in the locked position, the locking member (33A, 33B, 33C) co-operates with the lateral faces (3001) of its housing (300A, 300B).

9. A female element (3) according to any preceding claim, **characterized in that** the guide means comprise at least one longitudinal groove (30A, 30B, 30C) formed in the body (30) and suitable for housing the connecting portion (331) and/or the control portion (332) so as to laterally guide the locking member (33A, 33B, 33C).

10. A female element (3) according to claim 9, **characterized in that** the or each groove (30A, 30B, 30C) presents a flat bottom.

11. A female element (3) according to any preceding claim, **characterized in that** the control portion (332) forms a radial protrusion suitable for co-operating in abutment with a shoulder (372) formed on the annular element (37).

12. A female element (3) according to any preceding claim, **characterized in that** a washer is placed between the resilient member (382) and the or each control portion (332).

13. A female element according to any preceding claim, **characterized in that** the body (30) includes an axial abutment suitable for co-operating with the annular element (37) to limit the movement of the annular element (37) in the direction for unlocking the locking member (33A, 33B, 33C).

14. A female element (3) according to any preceding claim, **characterized in that** it includes a plurality of distinct locking members (33A, 338, 33C).

15. A coupling (1) for joining two pipes (C₂, C₃) together, the coupling including a male element (2) and being **characterized in that** it includes a female element (3) according to any preceding claim.

## Patentansprüche

1. Aufnahmeelement (3) einer Kupplung (1) umfassend:
- einen einen Kanal (C₃₀) umfassenden Körper (30), der vorgesehen ist, ein Einsteckelement (2) gemäß einer Kupplungsachse (X-X') der Kupplung (1) aufzunehmen;
- mindestens ein Verriegelungsorgan (33A, 33B, 33C), das ein Verriegelungsteil (330), das geeignet ist, einen Kontakt mit dem Einsteckelement (2) herzustellen, ein Anschlussteil (331) sowie ein Steuerteil (332), das über das Anschlussteil (331) mit dem Verriegelungsteil (330) verbunden ist, aufweist, wobei das Verriegelungsorgan (33A, 33B, 33C) sich im Wesentlichen gemäß der Achse (X-X') erstreckt und gemäß einer kombinierten Bewegung des Schwenkens (Y-Y') und der Längsbewegung gemäß der Achse (X-X') zwischen einer verriegelten Stellung, in der das Verriegelungsteil (330) fähig ist, das Einsteckelement (2) in dem Körper (30) gemäß der Achse (X-X') zu blockieren, und einer entriegelten Stellung, in der das Verriegelungsteil (330) den Durchgang des Einsteckelements (2) in dem Kanal (C₃₀) freimacht, beweglich ist;
- ein Ringelement (37), das geeignet ist, das Verriegelungsorgan (33A, 33B, 33C) von der verriegelten Stellung in die entriegelte Stellung mitzunehmen; und
- mindestens ein elastisches Rückstellelement (382) des Verriegelungsorgans (33A, 33B, 33C) in die verriegelte Stellung,
wobei das Aufnahmeelement (3) außerdem Mittel (30A, 30B, 30C) zur seitlichen Führung des oder Jedes Anschlussteils (331) und/oder des oder jedes Steuerteils (332) während der Bewegung des Verriegelungsorgans (33A, 33B, 33C) aufweist, wobei die Fläche (3302) des oder jedes Verriegelungsteils (330), die vorgesehen ist, in Kontakt mit dem Einsteckelement (2) zu sein, im Ganzen gesehen die Form eines Bereichs der Drehfläche um die Achse (X-X') aufweist, **dadurch gekennzeichnet, dass** die Breite (ℓ₃₃₂ und/oder ℓ₃₃₁) gemäß einer orthoradialen, d.h. umfänglichen Richtung (Y-Y') des oder jedes Steuerteils (332) und/oder des oder jedes Anschlussteils (331) kleiner als die Breite (ℓ₃₃₀) des oder jedes Verriegelungsteils (330) ist,

2. Aufnahmeelement (3) nach Anspruch 1, **dadurch gekennzeichnet, dass** der Bereich der Drehfläche sich über einen Winkelsektor (α₃₃₀) in Bezug auf die Achse (X-X') erstreckt, der größer oder gleich 30° ist.

3. Aufnahmeelement (3) nach Anspruch 1 oder 2, **dadurch gekennzeichnet, dass** jedes Verriegelungsteil (330) im Ganzen gesehen die Form eines Bereichs des Drehvolumens aufweist.

4. Aufnahmeelement (3) nach Anspruch 3, **dadurch gekennzeichnet, dass** der Bereich des Drehvolumens von zwei kegelstumpfförmigen Flächen (3302, 3303) gebildet wird, deren jeweilige Mantellinie auf der Achse (X-X') gemäß den jeweiligen Winkeln (α₃₃₀₂, (α₃₃₀₃) zwischen 30° und 60° geneigt ist.

5. Aufnahmeelement (3) nach einem der vorhergehenden Ansprüche, **dadurch gekennzeichnet, dass** das oder jedes Verriegelungsteil (330) eine Breite (ℓ₃₃₀) größer als seine Dicke (e₃₃₀) aufweist.

6. Aufnahmeelement (3) nach einem der vorhergehenden Ansprüche, **dadurch gekennzeichnet, dass** die Seitenflächen (3301) des oder jedes Verriegelungsteils (330) divergiert (α₃₀₀), indem es sich vom Kanal (C₃₀) entfernt.

7. Aufnahmeelement (3) nach einem der vorhergehenden Ansprüche, **dadurch gekennzeichnet, dass** der Körper (30) einen durchgehenden Aufnahmeraum (300A, 300B) für das oder jedes Verriegelungsteil (330) umfasst und dass das oder jedes Steuerteil (332) und das oder jedes Anschlussteil (331) an der Außenfläche des Körpers (30) des Aufnahmeelements (3) angeordnet sind.

8. Aufnahmeelement (3) nach Anspruch 7, **dadurch gekennzeichnet, dass** das Verriegelungsorgan (33A, 33B, 33C) in der verriegelten Stellung mit den Seitenflächen (3001) seines Aufnahmeraums (300A, 300B) zusammenwirkt.

9. Aufnahmeelement (3) nach einem der vorhergehenden Ansprüche, **dadurch gekennzeichnet, dass** die Führungsmittel mindestens eine Längsnut (30A, 30B, 30C) umfassen, die in dem Körper (30) ausgebildet ist und geeignet ist, das Anschlussteil (331) und/oder das Steuerteil (332) derart aufzunehmen, dass das Verriegelungsorgan (33A, 33B, 33C) seitlich geführt wird.

10. Aufnahmeelement (3) nach Anspruch 9, **dadurch gekennzeichnet, dass** die oder Jede Nut (30A, 30B, 30C) einen ebenen Boden aufweist.

11. Aufnahmeelement (3) nach einem der vorhergehenden Ansprüche, **dadurch gekennzeichnet, dass** das Steuerteil (332) einen radialen Vorsprung bildet, der geeignet ist, mit einer Schulter (372), die auf dem Ringelement (37) ausgebildet ist, als Anschlag zusammenzuwirken.

12. Aufnahmeelement (3) nach einem der vorhergehenden Ansprüche, **dadurch gekennzeichnet, dass** eine Ringscheibe zwischen dem elastischen Element (382) und dem oder jedem Steuerteil (332) angeordnet ist.

13. Aufnahmeelement nach einem der vorhergehenden Ansprüche, **dadurch gekennzeichnet, dass** der Körper (30) einen axialen Anschlag aufweist, der geeignet ist, mit dem Ringelement (37) zum Begrenzen der Bewegung des Ringelements (37) in der Entriegelungsrichtung des Verriegelungsorgans (33A, 33B, 33C) zusammenzuwirken.

14. Aufnahmeelement (3) nach einem der vorhergehenden Ansprüche, **dadurch gekennzeichnet, dass** es mehrere individuelle Verriegelungsorgane (33A, 33B, 33C) aufweist.

15. Kupplung (1) für die Verbindung von zwei Leitungen (C₂, C₃), ein Einsteckelement (2) umfassend, **dadurch gekennzeichnet, dass** sie ein Aufnahmeelement (3) nach einem der vorhergehenden Ansprüche umfasst.
